# EUROPEAN PATENT SPECIFICATION

(11) **EP 0 444 718 B1**
(45) Date of publication and mention of the grant of the patent: **20.07.1994**
(21) Application number: 91107888.9
(22) Date of filing: 11.03.1986
(51) Int. Cl.: B29D 30/06, B30B 15/00

(54) **Tyre vulcanizer**
Reifenvulkanisiermaschine
Presse pour la vulcanisation des bandages pneumatiques

(30) Priority: 02.05.1985 JP 95121/85; 26.03.1985 JP 44192/85 U; 11.03.1985 JP 34991/85 U; 05.04.1985 JP 51512/85 U; 27.01.1986 JP 10487/86 U
(43) Date of publication of application: 04.09.1991
(62) Divisional of application: 86301736.4
(73) Proprietor: KABUSHIKI KAISHA KOBE SEIKO SHO also known as Kobe Steel Ltd., Kobe 651 (JP)
(72) Inventor: Amano, Itaru, Suma-ku, Kobe (JP); Fujieda, Yashuhiko, Ohkuradani, Akashi, Hyogo-ken (JP); Ichikawa, Katsumi, Ohkuradani, Akashi, Hyogo-ken (JP); Kanzawa, Masahide, Nagata-ku, Kobe (JP); Yanagihara, Toshio, Chuo-ku, Kobe (JP); Misumi, Shikao, Kita-ku, Kobe (JP)
(74) Representative: Blake, John Henry Francis

(56) References cited:
- US-A- 2 285 389
- US-A- 2 345 838
- US-A- 3 079 856

## Description

The present invention relates to a tyre vulcanizer acording to the preamble of claim 1.

The present invention relates to an improvement in the device by which adjustment of an upper mould with respect to a lower mould in a tyre press is effected by synchronous rotation between a centre gear positioned in the centre and a plurality of nut gears disposed to encircle the centre gear, whereby accurate synchronous motion is provided to precisely and stably obtain the adjustment of the height of the upper mould.

### Description of the Prior Art

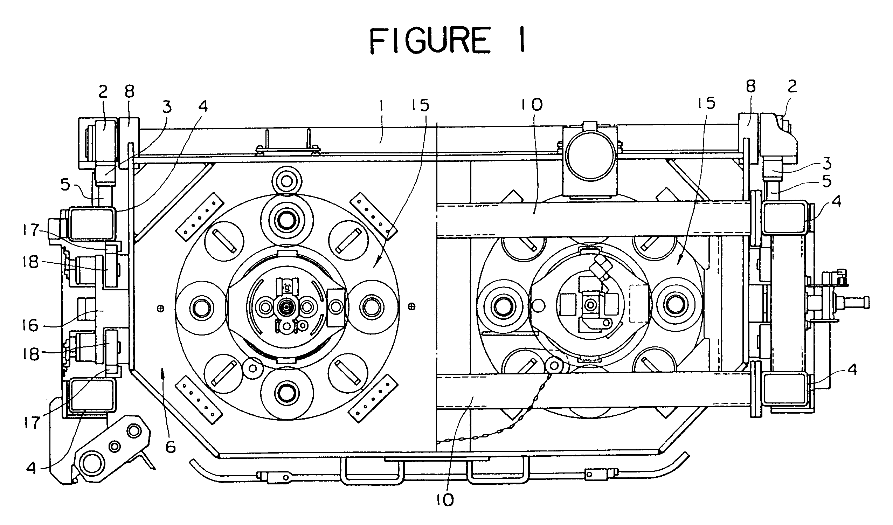

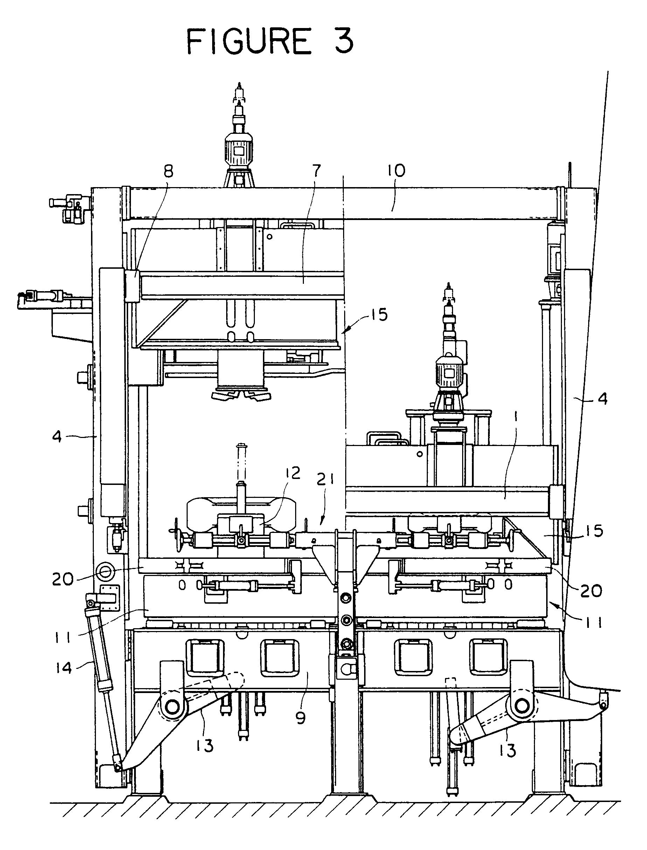

Tyre vulcanizers are known to comprise a lower mould assembly secured onto a press base, an upper mould assembly held movably up and down on a press side frame which may be opened and closed with respect to the lower mould assembly, a moulding bladder expansible relative to a lower mould center mechanism, and a means for supplying a pressurized heating medium. This tyre vulcanizer will be briefly described with reference to Figures 1, 2 and 3 showing the tyre vulcanizer as an embodiment in accordance with the present invention. While the tyre vulcanizer shown in Figures 1, 2 and 3 is a twin type in which two sets of upper and lower mould assemblies are juxtaposed within a common press frame, it will be noted that a single type employing a single set of vulcanizing and moulding moulds or a multi-type employing more than two sets, for example, four sets is similar in basic construction to the twin type. The frame of the vulcanizer comprises side frames 4, 4 on both sides of a base 9 mounted horizontally above a floor 9, a top beam 10 connecting the upper ends of both the side frames 4, 4. A lower mould assembly 11 is fixedly mounted on the base 9, the lower mould assembly 11 comprising a lower dome (which is sometimes omitted), a lower platen having an insulator, a hot plate or the like, a lower mould mounted on the lower platen, and other parts not shown. An expansible bladder to effect moulding of the tyre and a centre mechanism comprising means for supplying a pressurized heating medium such as steam to the bladder are disposed in the centre (press centre) position of the lower mould assembly 11. Figure 3 shows a part of a centre mechanism 12 which has been moved upwards by a knock-out lever 13 provided on the side of the base 9, a driving cylinder 14 provided on the side frame 4 and the like. Similarly to the lower mould assembly 11, an upper mould assembly 15 comprises an upper dome (which is sometimes omitted), an upper platen comprising an insulator, a heat plate or the like, an upper mould mounted below the upper platen and the like. Generally, a centre mechanism comprising a height adjusting mechanism which varies a height of the upper mould is mounted so as to be movable up and down at a centre (press centre) position of the upper mould assembly 15. In opening and closing the upper mould assembly 15 with respect to the lower mould assembly 11 by the vertical movement thereof, a slide 16 is provided on the side toward the side frame 4 of a frame 6 (which sometimes comprises an upper dome) for supporting the entire upper mould assembly 15. Guide rollers 18, 19 make rolling contact with a guide rail provided on the side of the side frame 4 to prevent any inclination and the frame 17 is mounted on a piston rod 7a of a fluid pressure cylinder 7 installed on the side of the side frame 4. The frame 17 is thus moved up and down through the slide 16 by forward and backward movement of the piston rod 7a to open and close the upper mould assembly 15 with respect to the lower mould assembly 11.

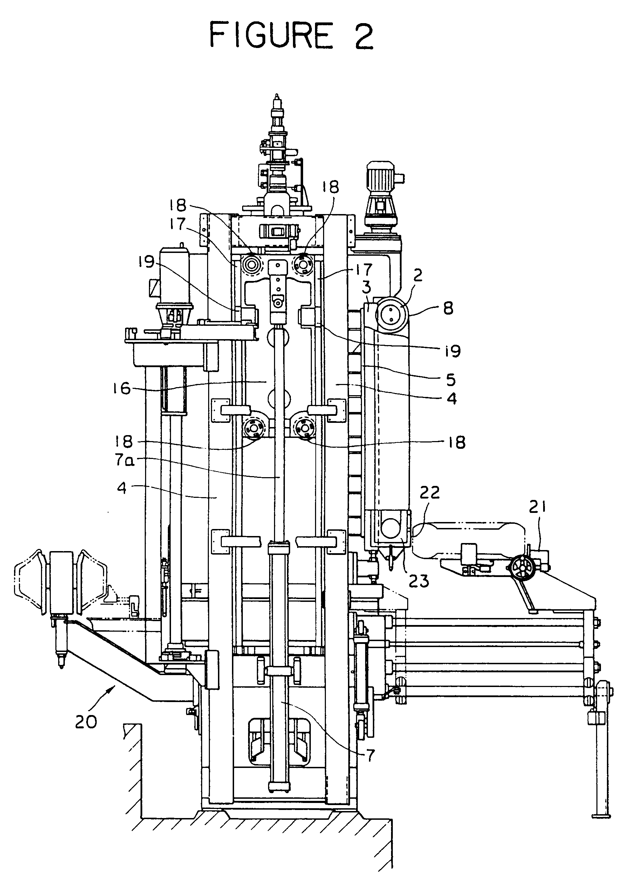

Thus, the upper mould assembly 15 is released with respect to the lower mould assembly 11 and moved upwardly. A green tyre is loaded into the lower mould of the lower mould assembly 11 by a tyre loader 19 or the like disposed on one side of the vulcanizer as shown in Figure 1. A moulding bladder is inserted into the inner surface of the green tyre. The upper mould assembly 15 is moved down to close the upper mould with respect to the lower mould, and the assemblies 11, 15 are clamped together by means of clamping rings 20 or the like shown in Figure 2. The moulds are then pressurized and heated to vulcanise and mould the tyres while the bladder is inflated and supplied with pressurized heating medium. After completion of vulcanizing and moulding, the upper mould assembly 15 is released and lifted, and the vulcanized tyre is removed from the lower mould and the bladder is taken out. The vulcanized tyre is received by a tyre unloader 21 as shown in Figure 3 and then conveyed out.

The above-described procedures are conventional. Although there are various changes in design and construction, the vertically opening and closing type tyre vulcanizer has the basic construction and function as described above.

The above-described vertically opening and closing type tyre vulcanizer has the merit of readily maintaining the upper and lower moulds parallel. However, the recent demand for keeping the moulds accurately parallel has become very severe, for example, in terms of numerical value, less than 0.2 mm/m, is required. A conventional system cannot easily cope with this severe demand. The motion mechanism for vertical upward and downward movement shown in Figures 1 to 3 is the fluid pressure cylinder 7. An alternative motion mechanism is a screw shaft which is reversibly rotatably mounted by bearings on the side of the side frame 4, and a ball screw nut provided on the slide 16, the ball screw nut being threadedly engaged with the screw shaft to effect vertical upward and downward movement. In use of either motion mechanism, the means for maintaining the moulds parallel is a slide guide member such as a guide rail 17 provided on the side of the side frame 4 and a plurality of spaced guide rollers 18, 19 disposed on the side of the slide 16 which engage with the slide guide member. The recent severe demand for accurate parallelism cannot easily be satisfied by such a slide guide construction as described above. During operation of the tyre vulcanizer, it is necessary to halfway close the upper and lower mould assemblies 15, 11, during which the green tyres are expanded by pressurized heating medium (steam) from the inside and the tyres are sealed and set into the upper and lower moulds. To maintain a high quality of tyre, particularly a uniformity and homogeneity of the tyre, it is important to properly maintain the parallelism of the upper and lower moulds. In the twin type press wherein two sets of mould assemblies are juxtaposed in a single press, as shown in Figures 1 to 3, the use of the slide guide system on the left and right side means that when the fluid pressure cylinders 7, 7 exert different thrusts (10% or so will be sufficient in view of experiences), or when only one unit on one side is used for vulcanization, when there will be resistance from the green tyre on one side only) the slide guide side receives an uneven force, thus making it difficult to retain the moulds in parallel relationship. In order to comply with the severe value less than 0.2 mm/m as previously noted, it is necessary to produce a design specification in which the left and right slide guides are parallel to within 0.05 mm. Thus a very rigid slide guide construction is required, which gives rise to a difficulty in terms of a space as well as installation, and in addition, requires control of the stroke of the fluid pressure cylinder.

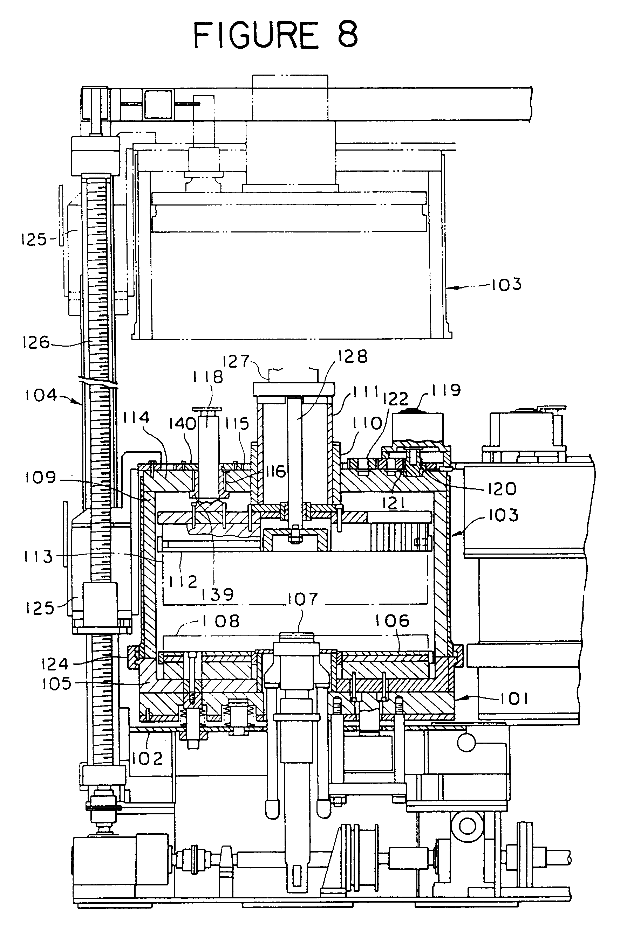

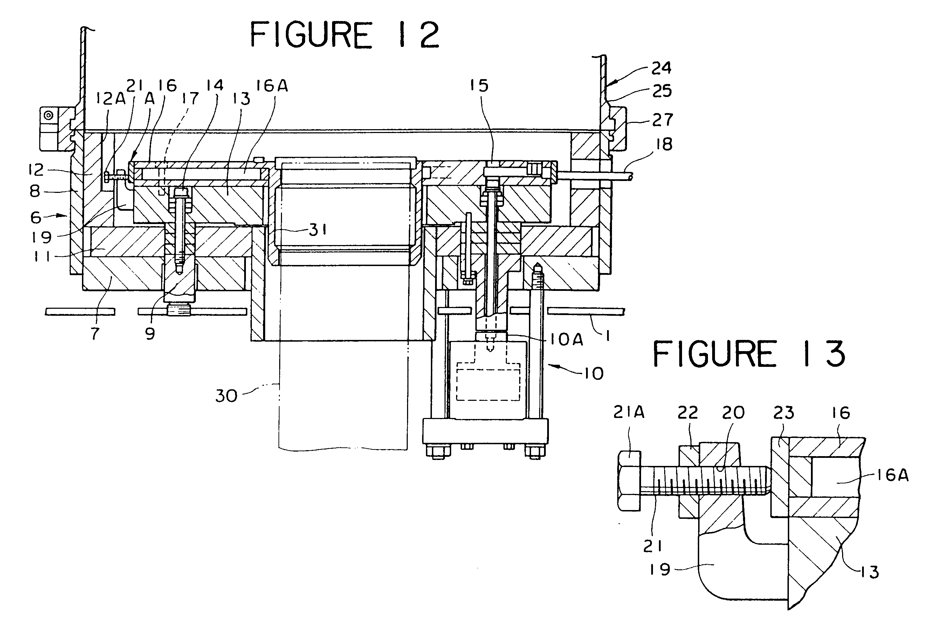

In a conventional mould-height adjusting device, in a tyre press wherein a lower mould assembly is installed on a press base, an upper mould assembly is held on the side of a press frame so that the upper mould assembly may be opened and closed with respect to the lower mould assembly, and green tyres are sealed between the upper and lower moulds and a moulding bladder provided in a centre mechanism of the lower mould assembly is inserted into the inside of the tyre while pressurized heating medium is supplied, thus effecting vulcanizing and moulding through heating of the upper and lower moulds, it is necessary that the spacing between the upper and lower moulds be made variable according to the size of tyres. In the prior art, the upper mould in the upper mould assembly is moved up and down to change the height of the upper mould, as schematically shown in Figures 8 and 9. Figure 8 shows the whole body of the upper and lower mould assemblies in the tyre press. A lower mould assembly 101 is secured to a base frame 102 in a press machine whereas an upper mould assembly 103 is installed on a side frame 104 in the press machine so that the assembly 103 may be moved up and down from a closed position as indicated by the solid line to an open position as indicated by the chain line, the upper mould assembly thus being opened and closed with respect to the lower mould assembly 101. Means for securing the lower mould assembly 101 and means for moving the upper mould assembly 103 upward and downward are well known and therefore will not be particularly mentioned. The lower mould assembly 101 is composed, as is known, of a lower dome 105, a lower platen 106 comprising a hot plate, an insulator or the like, a moulding bladder for the inner surface of a tyre, a centre mechanism 107 comprising means for supplying a pressurized heating medium such as steam, an expanding mechanism for the bladder, and a lower mould 108 secured onto the lower platen 106 and the like. The upper mould assembly 103 is also composed, as is known, of an upper dome 109 mounted so as to be movable up and down on the side of the side frame 104, a centre mechanism 111 slidably inserted into a guide support 110 provided at a press centre position of the upper dome 109, an upper platen 112 comprising a hot plate held on the centre mechanism 111, an insulator or the like, an upper mould 113 secured to the upper platen 112 and the like. In an adjusting device which adjusts the height of the upper mould 113 to meet the size of the green tyre, a ring-like centre gear 115 is rotatably mounted on the guide support 110 through a bush or the like at the top 114 of the upper dome 109, four (in the illustrated example) screw nuts 116 are peripherally equidistantly provided on the top 114 of the upper dome 109 encircling the centre gear 115, the top 114 is holdingly and rotatably disposed through a gear support 140 and a flange 139 provided on both upper and lower ends of the nut 116, and a nut gear 117 provided on the gear support 140 of each screw nut 116 is meshed with the centre gear 115. Each screw shaft 118 threadedly inserted into each of said screw nuts 116 is connected to the upper platen 112. Thus, according to the above-described construction, as the centre gear 115 rotates, each nut gear 117 is synchronously rotated, and the screw nut 116 integral with the nut gear 117 rotates at its position, whereby each screw shaft 118 is moved up and down through the normal and reverse rotation of the centre gear 115 along with the upper platen 112 to freely vary and adjust the position of the upper mould 113 secured to the upper platen 112. In prior art, in the normal and reverse rotation of the centre gear, 115, a power pinion 120 of a prime mover 119 such as a motor mounted on the top 114 of the upper dome 103 is brought into engagement with a reduction intermediate gear 121 mounted on the top 114 to bring the intermediate gear 121 into engagement with a driving pinion 122 likewise mounted on the top 114 and meshed with the centre gear 115 to thereby rotate the centre gear 115, or the driving pinion 122 as brought into engagement with one of four nut gears 117 whereby the centre gear 115 is rotated by the nut gear 117.

The prior art has the following problems. An area of the upper dome 110 in the upper mould assembly 103 is restricted and the centre mechanism 111 has a considerable diameter. Therefore, the remaining available area is further decreased, and a plurality of bolt mounting portions 123 for the moulds as shown in Figure 9 have to be provided in addition to installation of a plurality of screw nuts 116 and nut gears 117. Therefore, the direct engagement of the driving gear 122 shown in Figure 9 with the centre gear 115 to rotate the centre gear 115 is advantageous in provision of synchronous rotation of the nut gear 117 but the provision of the driving pinion 122 and intermediate gear 121 in the space left by the installation of the nut gear 117 and bolt mounting portions 123 involves careful design. In addition, the prime mover has to be installed in a restricted and difficult space and the size of the driving pinion 122 is restricted. Moreover, the engagement of the driving pinion 122 with the single nut gear 117 to rotate the centre gear 115 through the nut gear 117 does not cause difficulties in terms of space but the complete synchronous motion of each nut gear 117 is difficult to attain owing to backlash of the gear. This is disadvantageous in terms of accurate upward and downward movement of the upper mould.

The present applicant has previously proposed a mould fastening device for a tyre vulcanizer in Japanese Patent Application Laid-Open No. 138432/84.

This shows a tyre vulcanizer comprising a press base, a lower mould hollow portion and an upper mould hollow portion vertically movable toward the first-mentioned hollow portion, which are arranged opposedly of said base, a centre mechanism arranged in the centre of each upper and lower mould hollow portions, mechanical locking means for the upper and lower hollow portions, and mould pressing means for directly acting on the lower portions of the lower mould, a mould fastening device comprising means for securing the lower mould within the lower mould within the lower mould hollow portion to the press base, means for resiliently supporting said lower mould hollow portion on the press base and mould pressing means interposed between said lower mould hollow portion and the lower mould. This proposal is considered to be useful in its own way.

In the above-mentioned prior art, the lower mould hollow portion or cavity is resiliently supported on the press base by means of flat springs or the like and therefore there is a problem in terms of durability. Furthermore, the use of springs means that stop position of the press varies which makes it difficult to set the fastening force and the height of the mould. Moreover, the position at which the press is totally closed is normally set by a limit switch or the like but flexing of the flat spring makes it impossible to accurately detect.

A tyre vulcanizer is known in which the outer circumferential surface of the green tyre is moulded by an openable and closeable mould device, and the inner circumferential surface of the green tyre is moulded through a bladder that may be inserted into the mould device.

A tyre vulcanizer of the type, in which a tyre is once placed on the upper mould in the mould device and thereafter the mould device is totally closed, is disclosed in US Patent No. 4,444,715 Specification.

US-A-2285389 describes a tyre vulcanizer press having a pressure adjustable pair of coacting press heads which have a pair of coacting mold parts therein, the pressure being adjustable by means of spaced threaded spindles mounted within one of the heads and a nut journalled in that head and in threaded engagement with each spindle; means being provided for simultaneously turning the nuts.

US-A-3079856 describes a portable can crusher comprising a hollow base member adapted to be seated on a supporting surface and having a flat top surface on which cans are seated during crushing, said top surface having three spaced openings adjacent its periphery, elongated guide members secured within the base member adjacent its bottom and extending vertically to respective openings in concentric relation thereto, an upper member shaped similarly to said flat top surface and having a flat bottom surface, hollow columns secured on said upper member and pending through said openings and associated guide members, each said column being internally threaded adjacent its bottom, a vertical screw supported at the bottom of the base member and extending upwardly through each hollow column in engagement with its internal thread, and means including a train of gears for imparting a synchronous drive to said screw so as to maintain uniform spacing between the flat surfaces in can crushing and removal operations.

In accordance with the invention of the present application there is provided a tyre vulcanizer in which a lower mould assembly is mounted on a press base, an upper mould assembly is mounted to be opened and closed with respect to said lower mould assembly on the side of a press frame, and screw shafts disposed on a mould supporting platen in a circumferentially equidistant fashion surrounding a centre mechanism of an assembly and nut gears provided adjustably in height through screw nuts threadedly engaged with said screw shafts at the top of an assembly dome and mounted on said screw nuts are synchronously driven by a centre gear provided at the top of the dome concentric with said centre mechanism, characterized in that there is provided an idle gear meshed with the centre gear coaxial with a nut gear meshed with said centre gear, said idle gear being operatively connected to a driving gear driven by a prime mover.

### BRIEF DESCRIPTION OF THE DRAWINGS

Figure 1 is a plan view of a twin tyre vulcanizer using an embodiment of the device according to the present invention;
Figure 2 is a side view of the same;
Figure 3 is a front view as viewed from the rear side thereof;
Figure 4 is a plan view of a mould-height adjusting device according to the present invention;
Figure 5 is a sectional view taken along line A-A of Figure 4;
Figure 6 is a sectional view taken on line C-C of Figure 4;
Figure 7 is a sectional view taken on line D-D of Figure 4;
Figure 8 is a longitudinal sectional front view showing one example of a tyre press;
Figure 9 is a plan view showing one example of a conventional height adjusting device;
Figure 12 is a vertical sectional view showing essential parts of a tyre vulcanizer;

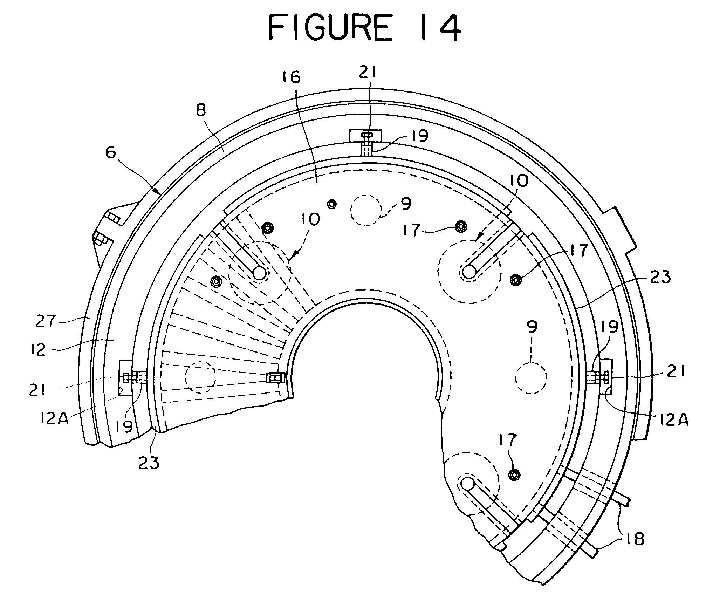

Figure 13 is an enlarged view of a portion as indicated by arrow A in Figure 12;
Figure 14 is a plan view with a part omitted;

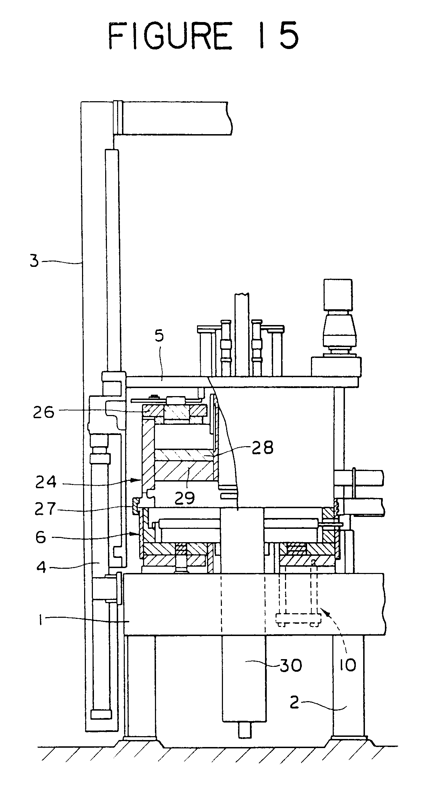

Figure 15 is a vertical view with a part omitted showing the entire construction of the tire vulcanizer;

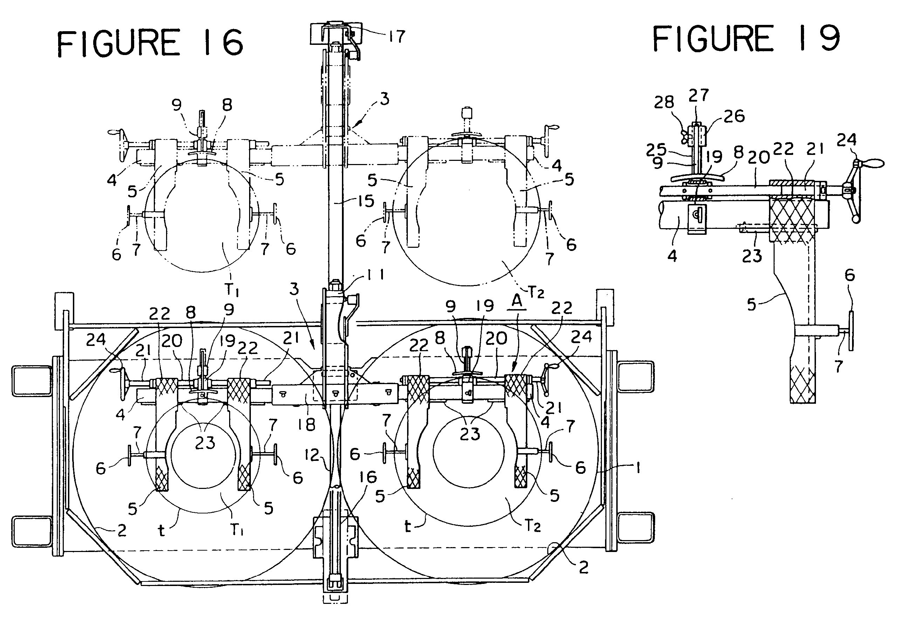

Figure 16 is a plan view of a tyre carrying-out device;

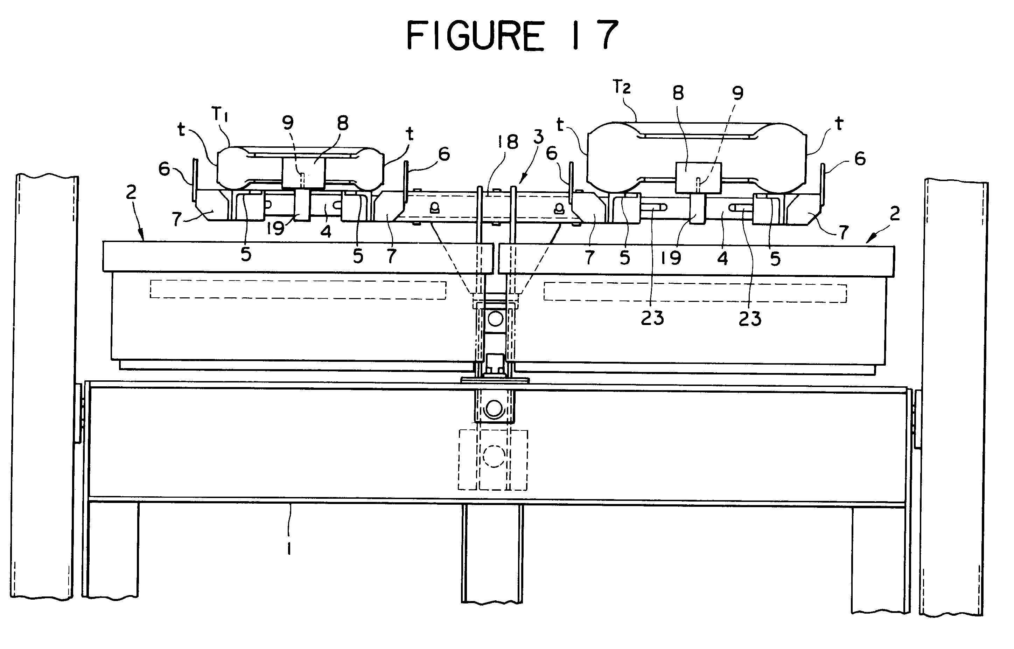

Figure 17 is a front view of the same;

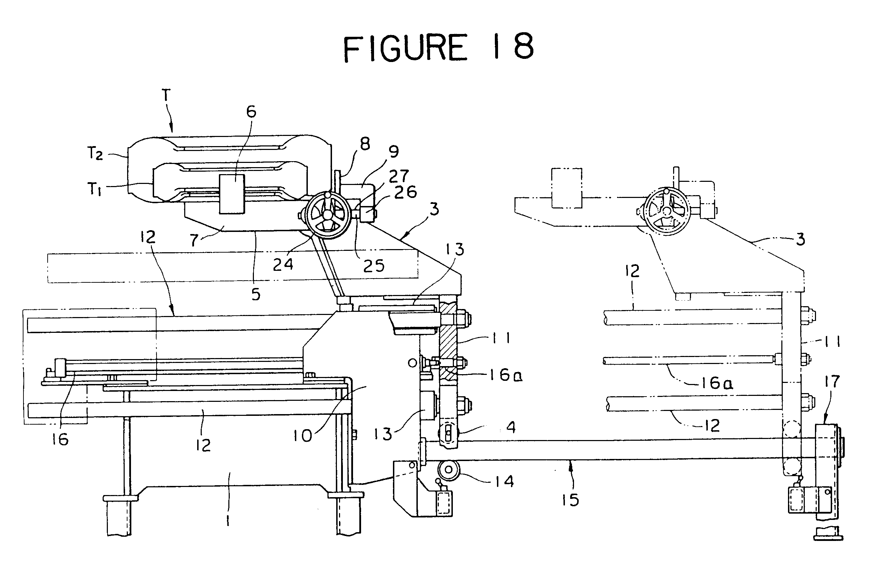

Figure 18 is a side view of the same; and
Figure 19 is a partly cutaway plan view showing the detailed construction of a portion A of Figure 16.

### DETAILED DESCRIPTION OF THE INVENTION AND PREFERRED EMBODIMENTS

According to the present invention, a slide 16 is integrally provided externally of a frame 6 for supporting the whole of an upper mould assembly 11, and a plurality of guide rollers 18, 19 in contact with and are supported on a guide rail 17, the slide 16 being provided on the side of a side frame 4. Said guide rollers 18, 19 are movable up and down. A tyre unloader 21 is mounted at the rear of the press opposite to a tyre loader 20. Bearing blocks 8, 8 are provided on opposite ends of the rear surfaces of the frame 6, and a torsion shaft 1 is mounted parallel to a base 9 over the bearing blocks 8, 8, horizontally and at a right angle to side frames 4, 4, Shift 1 is rotatbly journalled in bearing blocks 8 and pinions 2, 2 are secured to opposite ends of the shaft 1, said pinions 2, 2 being engaged with racks 3, 3 mounted vertically on a support 5 externally of the side frame 4. The torsion shaft 1 is moved during vertical operation for opening and closing the assembly 15 together with the slide 16 and the frame 6, i.e., in synchronism with the upper mould assembly 15 integral with the frame 6 and is rotated around its axis by the pinions 2, 2 engaging the rack 3, 3 surfaces. Thus the left and right slides 16, 16 and fluid pressure cylinders 7, 7 are synchronised with each other by the torsion shaft 1, over the entire opening and closing movement of the upper mould assembly 15. Thus the movable upper mould and fixed lower mould are maintained parallel to the required high degree of accuracy. By properly setting the diameter of the torsion shaft 1, the above-described strict accuracy of parallelism to less than 0.2 mm/m can be satisfied using the conventional slide guide construction without further modification.

A support portion 23 also serving as a stop for the shaft 1 is provided at the lowest end of the rack 3 in the lowest position of the torsion shaft 1 corresponding to the closed position of the upper mould assembly 15 by means of a bracket 22 or the like.

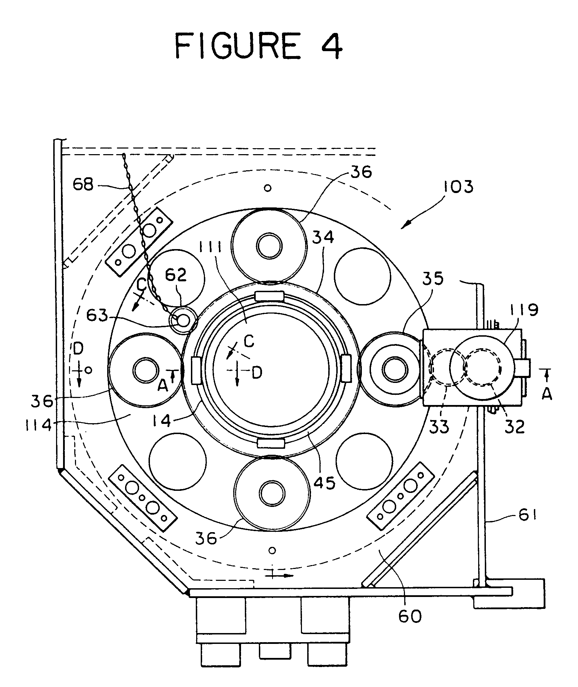

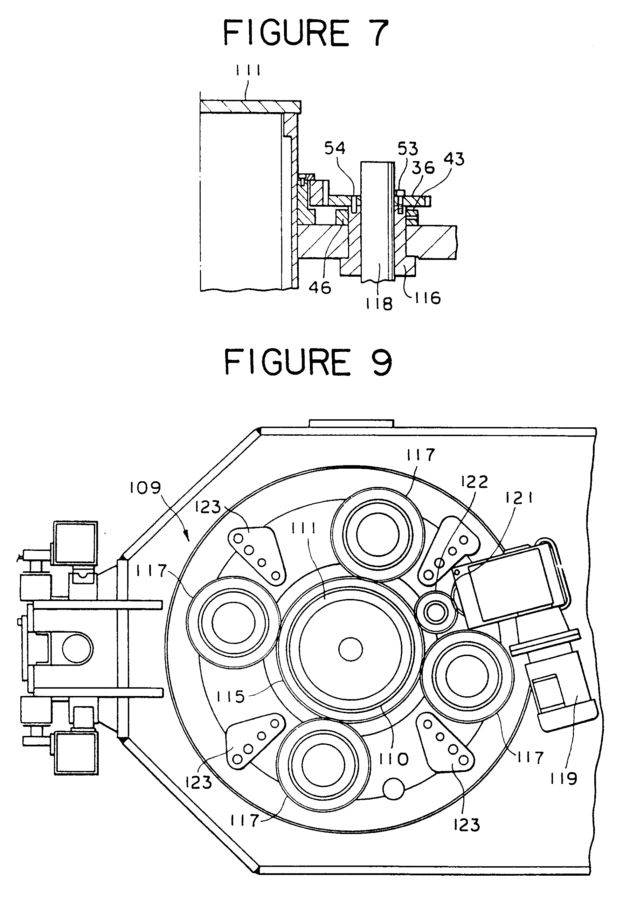

According to Figures 4 to 7, a centre mechanism 111 is slidably provided at a centre position of a top 114 of an upper dome 109 in an upper dome assembly 103 and a plurality of screw nuts 116 are rotatably disposed at the top 114 at peripherally equidistant positions surrounding the centre mechanism 111 and a screw shaft 118 is threadedly inserted into each screw nut 116 for vertical movement in a similar manner to that already known. In the present invention, however, a centre gear 34 is rotatably mounted through a bush 44 or the like on a gear support 45 disposed on the top 114 side surrounding the centre mechanism, and an idle gear 37 is coaxially superposed above a nut gear 35 meshed with the centre gear 44 and provided on the screw nut 116 side, the idle gear 37 being likewise meshed with the centre gear 37. Intermediate gears 33, 33 are used which are provided at upper and lower portions of an intermediate shaft 39 rotatably mounted through a bush 40 on a shaft support 41 provided on the bracket 31 so that the upper intermediate gear 33 is engaged with a driving gear 32 of a motor 119 or a prime mover installed on a motor bracket 31 mounted on a wall 61 of a plate 60 attached to the top 114, and the lower intermediate gear 33 is engaged with the idle gear 37. A nut gear 36 is provided on each of other screw nuts 116 of the nut gear 35 and is brought into engagement with the centre gear 34 as shown in Figure 7.

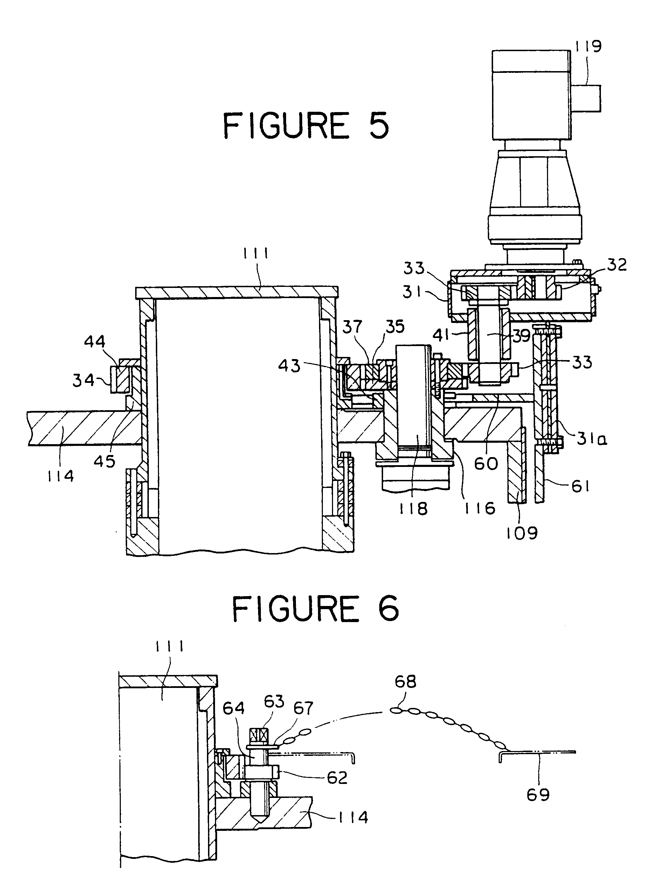

The apparatus operates as follows. That is, to move the upper mould 113 in the upper mould assembly 103 upward and downward for adjustment of the height, the motor 119 is rotated with the driving gear 32 either normally or reversely. The gear 32 is interlocked with the upper and lower gears 33, 33 of the intermediate shaft 39, and the centre gear 34 is directly rotated by the idle gear 37. The nut gears 35, 36, 36, 36 are accurately synchronously driven through the rotation of the centre gear 34 by the idle gear 37, and the screw shafts 118 are moved up and down at the same time by either normal or reverse rotation of the screw nuts 116. With this, the upper mould 113 is accurately and stably moved up and down through the upper platen 112 with the screw shafts 118 connected there to to easily adjust the height with accuracy and high precision. According to the aforesaid arrangement, the idle gear 37 for directly rotating the centre gear 34 and the single nut gear 35 are coaxially disposed and the idle gear 37 is connected to the driving gear 32 on the prime mover side to thereby eliminate the inaccuracy of the synchronous motion resulting from the driving of the centre gear 34 by the nut gear and to impart a synchronous motion to the nut gears 35, 36 and screw shafts 118. In terms of space occupied by the single nut gear 35 so that there is no difficulty in securing a space for installation of the idle gear 37 in the limited space in the top 114 of the upper dome 109. Thus freedom in design and sufficient space may be obtained for the engagement the nut gears 35, 36 on the top 114, the bolt mounting portions of the moulds, and the motor 119, etc., with sufficient space. For example, as shown in Figures 4 and 6, the gear may be mounted on the top 114 together with a shaft 64 provided at an engaging head 33 with a jack pinion 62 for manually rotating the centre gear 34 in case of trouble with the motor, a power failure or other problems.

Reference is made to Figures 1, 2 and 3. The present invention may be applied to any type of tyre vulcanizer of the type in which the upper mould assembly 15 is moved up and down with respect to the lower mould assembly 11 through the frame 6 and the slide 16 so that it may be opened and closed. For the internal assembly construction of the upper and lower mould assemblies 15, 11, various constructions of a conventional tyre vulcanizer may be freely employed, which are therefore omitted from detailed explanation. The upper and lower moulds may be of the type in which the mould is divided into two sections from a central position of a tyre tread portion or of the type in which the lower mould comprises only a single tyre side wall and the upper mould is divided into two sections, one to mould a side wall portion and the other to mould a tread portion. For carrying in a green tyre and lifting out a vulcanized tyre, devices and mechanisms other than the illustrated tyre loader 19 and the tyre unloader 21 may be used. Although the twin type is shown, a single or a multi-type may also be used. In the case of the illustrated twin type, the frame 6 extends over the two upper mould assemblies 15, 15 or is connected by a connecting beam. The frame 6 can be similar to one heretofore known as a top slide, including one in which the slide 16 is connected to the upper dome itself.

The torsion shaft 1 need not be formed of a material having a high rigidity and may have a suitable sectional shape. However, the diameter of the shaft 1 should be suitable for the size of the vulcanizer. The integrated construction of the slide 16, frame 6, torsion shaft 1 and the upper mould assembly 15 can be different from those illustrated. A construction other than the rack 3 and pinion 2 may be used if it has the same effect of synchronous movement and rotation.

The present invention is excellent in solving the difficult problem of meeting the demand of strict parallelism which is required by a conventional tyre vulcanizer of the type in which upper mould is vertically opened and closed. It has been confirmed as the result of practice that in a conventional vulcanizer in which the upper and lower moulds (upper and lower platens) are maintained parallel to less than 0.2 mm/m the addition of the torsion shaft 1 improves this to less than 0.05 mm.

More specifically, imbalance and unevenness resulting from independent operation of the left and right slide guide portions are eliminated by the torsion shaft 1 which rigidly connects both portions. As the result, in the twin type vulcanizer as illustrated, even if only the press cavity on one side is operated to effect vulcanization, the required high degree of parallelism is maintained. Moreover, according to the technical means of the present invention, the conventional slide guide construction is utilized without modification, and an increase in rigidity of the press frame and an increase in size of the slide are not required. Thus, the demand for a high degree of parallelism can be satisfied by a construction with a relatively low rigidity, as a consequence of which the precision of the vulcanizer may be enhanced. Accordingly, the present invention is realistic and greatly advantageous.

Reference is made to Figures 4 to 7. In the illustrated embodiment, in slidably providing the centre mechanism 111 in the centre of the top 114 of the upper dome 109, an inserting hole 40 is made in the centre position of the tip 114 and a gear support 45 is erected on the upper surface of the top at the position of the hole 40. In this case, however, a bracket 110 shown in Figure 8 may be used. In providing the nut gear 5 and the idle gear 7 on the screw nut 116 in a coaxial and superposed manner, in the embodiment shown in Figure 5, the nut 35 is arranged through a thrust ring 43 on a support 46 provided on the upper end of the screw nut 116.

A support 38 is coaxially mounted on the gear 35 by a bolt 51, the idle gear 37 is mounted on the support 38, and the support 38, nut gear 35 and screw nut 116 are integrally fastened by means of separate bolts 52. The gear 35 and support 38 are loosely fitted on the screw shaft 118. Of course, this mounting construction is a mere example and constructions other than that shown may be used. A motor bracket 31 is of generally box-like form including a cover plate 47, and a mounting portion 31a projecting from the lower surface of the bracket 31 is fastened and secured to the wall 31 side by means of a bolt or the like. On a jack pinion 62 shown in Figure 6, reference numeral 68 designates a chain provided through a clip 67, and numeral 69 designates a cover held on the chain 68. Figure 7 shows a nut gear other than the nut gear 35 shown in Figure 8 in which case, the gear 35 is secured through a thrust ring 43 to the screw nut 116 by means of a parallel pin 54 and a fastening bolt 53. In the tyre press shown in Figure 4, reference numeral 124 designates a known clamp ring for disengageably clamping upper and lower domes 109, 105 when the upper and lower mould assemblies 101, 103 are closed, and numeral 125 designates a lift connected to the upper dome assembly 103. A ball screw nut (not shown) which threadedly engages the screw shaft 126 on the side frame 104 is provided on the lift 125 to effect vertical movement.

A fluid pressure cylinder 127 is installed on the top of the centre mechanism 115, and a piston rod 128 thereof extends through the centre mechanism 111 and is connected to the upper mould 113, which parts are well known.

The present invention is excellent in eliminating the disadvantages encountered in the prior art such as the type of press in which the centre gear is directly driven by a pinion gear and the type of press in which it is driven by use of a nut gear. More specifically, in the pinion type, the centre gear is connected through the prime gear on the side of the prime mover and the intermediate gear and is provided at a position separately from the nut gear. On the other hand, in the present invention, the idle gear 37 is coaxially and superposedly provided concentric with the single nut gear 35 to thereby completely eliminate the necessity for a separate space for installation of the gear. Thus the disadvantages of the prior arrangement in terms of a greatly restricted space for various parts in the upper dome top 114 are eliminated. A large diameter of driving pinion may be employed. Positive driving may be obtained and a freedom of design may be secured. For the driving system making use of the nut gear, completely synchronous operation may be secured to thereby allow adjustment of the height of the upper mould with high accuracy. Thus, the invention solves problems encountered in adjusting the height of the upper mould.

## Claims

1. A tyre vulcanizer in which a lower mould assembly (101) is mounted on a press base (102), an upper mould assembly (103) is mounted to be opened and closed with respect to said lower mould assembly (101) on the side of a press frame, and screw shafts (118) disposed on a mould supporting platen in a circumferentially equidistant fashion surrounding a centre mechanism (111) of an assembly and nut gears (35) provided adjustably in height through screw nuts (116) threadedly engaged with said screw shafts (118) at the top of an assembly dome (103) and mounted on said screw nuts (116) are synchronously driven by a centre gear (34) provided at the top of the dome (103) concentric with said centre mechanism (111), characterized in that there is provided an idle gear (37) meshed with the centre gear (34) coaxial with a nut gear (35) meshed with said centre gear (34), said idle gear (37) being operatively connected to a driving gear (32) driven by a prime mover.

## Patentansprüche

1. Eine Reifenvulkanisiermaschine, bei der eine Unterformeinheit **(101)** auf einem Preßtisch **(102)** montiert ist, eine Oberformeinheit **(103)** so montiert ist, daß sie an der Seite eines Pressenrahmens gegenüber der Unterformeinheit **(101)** zu öffnen und zu schließen ist, und in einer Formträgerplatte Gewindespindeln **(118)** kreisförmig und gleich beabstandet um einen Zentralmechanismus **(111)** einer Einheit angeordnet sind, und mit Mutternantriebszahnrädern **(35)** verbundene Muttern **(116)**, die mit den Gewindespindeln **(118)** im Oberteil eines Doms **(103)** der Einheit ein Schraubengetriebe bilden und damit eine Höheneinstellung ermöglichen, wobei die Mutternantriebszahnräder **(35)** mit den Muttern **(116)** durch ein Zentralzahnrad **(34)**, das konzentrisch zum Zentralmechanismus **(111)** im Oberteil des Pressendoms **(103)** angeordnet ist, synchron angetrieben werden, dadurch gekennzeichnet, daß mit dem Zentralzahnrad **(34)** ein Zwischenrad **(37)** Eingriff hat, das koaxial zum Mutternantriebszahnrad **(35)** liegt, das mit dem Zentralzahnrad **(34)** im Eingriff ist, wobei das Zwischenzahnrad **(37)** funktionell mit einem Antriebszahnrad **(32)** einer Antriebseinheit gekoppelt ist.

## Revendications

1. Vulcanisateur dans lequel un assemblage de moule inférieur (101) est monté sur une base de presse (102), un assemblage de moule supérieur (103) est monté pour être ouvert et fermé par rapport audit assemblage de moule inférieur (101) sur le côté d'un cadre de presse, et des arbres filetés (118), disposés sur un plateau de support de moule, à intervalles réguliers sur la circonférence, entourant un mécanisme de centrage (111) d'un assemblage et des engrenages écrou (35), disposés de manière réglable en hauteur par l'intermédiaire d'écrous (116) engagés dans le filetage desdits arbres filetés (118) au sommet d'un dôme d'assemblage (103) et montés sur lesdits écrous (116), sont entraînés, de manière synchrone, par un engrenage de centrage (34) disposé au sommet du dôme (103) concentrique avec ledit mécanisme de centrage (111), caractérisé en ce qu'il existe un engrenage fou (37) en prise avec l'engrenage de centrage (34) coaxial avec un engrenage écrou (35) en prise avec ledit engrenage de centrage (34), ledit engrenage fou (37) étant relié, de manière opérationnelle, avec un engrenage d'entraînement (32) entraîné par une machine motrice.
